# EUROPÄISCHE PATENTSCHRIFT

(11) **EP 3 783 067 B1**
(45) Veröffentlichungstag und Bekanntmachung des Hinweises auf die Patenterteilung: **16.02.2022**
(21) Anmeldenummer: 19192736.7
(22) Anmeldetag: 21.08.2019
(51) Int. Cl.: C08L 101/16, B65D 65/46, B65D 85/804, C08L 67/04

(54) **POLYMERMATERIAL**
POLYMER MATERIAL
MATÉRIAU POLYMÈRE

(43) Veröffentlichungstag der Anmeldung: 24.02.2021
(73) Patentinhaber: Lapp Engineering AG, 6330 Cham (CH)
(72) Erfinder: Wolfer, Pascal, 6330 Cham (CH); Takacs, Bela, 6330 Cham (CH)

(56) Entgegenhaltungen:
- EP-A1- 3 059 066
- JP-A- H04 139 248
- DATABASE WPI Week 199948 Thomson Scientific, London, GB; AN 1999-566684 XP002797442, & JP H11 246727 A (KURARAY CO LTD) 14. September 1999 (1999-09-14)
- DATABASE WPI Week 199506 Thomson Scientific, London, GB; AN 1995-041434 XP002797443, & JP H06 322198 A (KURARAY CO LTD) 22. November 1994 (1994-11-22)
- DATABASE WPI Week 199309 Thomson Scientific, London, GB; AN 1993-071199 XP002797444, & JP H05 17590 A (KUWABARA Y) 26. Januar 1993 (1993-01-26)

## Beschreibung

Die Erfindung betrifft ein biologisch abbaubares und kompostierbares Polymermaterial mit verbesserten Barriereeigenschaften sowie eine aus dem Polymermaterial gefertigte Kapsel zur Getränkezubereitung.

Aus dem Stand der Technik sind eine Vielzahl an biologisch abbaubaren und/oder kompostierbaren Polymermaterialien bekannt. Diese Materialien eignen sich insbesondere als Verpackungs- und Transportmaterialien für Lebensmittel- und/oder Getränkeprodukte, da etwaige Lebensmittel- und/oder Getränkereste direkt mit dem Verpackungs- oder Transportmaterial kompostiert oder anderweitig biologisch abgebaut werden können.

Um die Haltbarkeit und/oder die Qualität von Lebensmitteln oder Getränkeprodukten zu erhöhen, werden Verpackungs- und/oder Transportmaterialien oftmals beschichtet oder sind mehrlagig aufgebaut. Hierzu werden unterschiedlichste Materialien miteinander kombiniert, so dass sowohl das Recycling als auch eine etwaige Kompostierbarkeit oder biologische Abbaubarkeit nicht mehr gegeben ist. Zudem wird durch die Beschichtung der Fertigungsaufwand erhöht.

Aus der EP3060498B1 ist eine Kapsel zur Herstellung von Getränkeprodukten bekannt. Die Kapsel umfasst einen Grundkörper aus einem Papier-basierten Material und einen daran angeformten Flansch, der aus einem ersten Polymer und einem zweiten Polymer gefertigt ist. Um das in der Kapsel enthaltene Material gegen Oxidation zu schützen ist das Papier-basierte Material mit einer Barriereschicht überzogen. Das zweite Polymer des Flansches ist eine Gasbarriereschicht, und überlappt die Barriereschicht des Grundkörpers um eine durchgängige Barrierewirkung zu erzielen. Der Fertigungsaufwand für diese Kapsel ist sehr hoch und die Vielzahl unterschiedlicher verwendeter Materialien erschwert das Recycling.

Aus der WO2015/162632A1 ist eine biologisch abbaubare und kompostierbare Kaffeekapsel aus einem Polymermaterial bekannt, welche mitsamt Inhalt der Kompostierung zugeführt werden kann. Die Kapsel weist keine Barriereeigenschaften auf. Unter Barriereeigenschaften versteht man bei Kunststoffen und Polymermaterialien die nicht vorhandenen oder sehr geringfügige Durchlässigkeit (Diffusion) von Gasen (z.B. Sauerstoff), Dämpfen (z.B. Wasserdampf) und Aromen. Das in der Kapsel enthaltene Kaffeepulver ist nicht lange haltbar, und die Aromastoffe können entweichen oder beschädigt werden, wodurch die Qualität reduziert wird.

Aus der WO2014/184653A1 ist eine Kaffeekapsel aus einem Laminat aus Aluminium und einem Polymer bekannt. Durch die Aluminiumschicht weist die Kapsel gute Barriereeigenschaften auf. Für das Recycling müssen sowohl der Kapselinhalt als auch das Aluminium und das Polymer voneinander getrennt werden, was sehr aufwändig ist. Zudem sind für die Fertigung der Kapsel mehrere Schritte notwendig.

Die JPH11246727A zeigt eine biologisch abbaubare Polymerzusammensetzung mit 5-99% Ethylen-Vinylalkohol und 95-1% eines aliphatischen Polyesters.

Die JPH06322198A zeigt ein Polymermaterial mit guten mechanischen Eigenschaften mit Ethylen-Vinylalkohol und Poly(3-hydroxybutyl).

Die JPH04139248A zeigt ebenfalls eine Polymerzusammensetzung mit 5-99% Ethylen-Vinylalkohol und 95-1% eines aliphatischen Polyesters. Die Polymerzusammensetzung ist biologisch abbaubar.

Die JPH0517590A zeigt ein Material mit einem gesättigten Polyester und einem thermoplastischen Harz. Das Material hat eine Mehrschichtstruktur.

Die EP3059066A1 zeigt einen Polymerfilm für die Verschlusskappe von Einzeldosenkaffeekapseln. Der Film weist eine deformierbare Polymermatrix und ein nicht-deformierbares Füllmaterial auf.

Die Beeinflussung bzw. Optimierung einer technischen Eigenschaft eines Polymermaterials beeinflusst auch die übrigen technischen Eigenschaften des Polymermaterials. Es ist in der Regel nicht möglich, eine ausgewählte technische Eigenschaft unabhängig von den übrigen Eigenschaften zu verbessern.

Der vorliegenden Erfindung liegt somit die Aufgabe zugrunde, ein Polymermaterial zu schaffen, welches biologisch abbaubar und kompostierbar ist und verbesserte Barriereeigenschaften aufweist.

Insbesondere soll das Polymermaterial für Anwendungen im Zusammenhang mit Lebensmittel- und/oder Getränkeprodukten, insbesondere für Kaffeekapseln, geeignet sein und gute mechanische Eigenschaften aufweisen.

Ferner soll das Polymermaterial kostengünstig herstellbar sein und ein niedriges spezifisches Gewicht aufweisen.

Zudem soll das Polymermaterial durch Spritzgiessen verarbeitbar sein.

Weiters soll aus dem Polymermaterial eine Kapsel zur Getränkezubereitung, insbesondere eine Kaffeekapsel, mit verbesserten Barriereeigenschaften herstellbar sein.

Diese Aufgabe wird mit einem Polymermaterial gelöst, welches die in Anspruch 1 angegebenen Merkmale aufweist. Vorteilhafte Ausgestaltungen der Erfindung sind in weiteren Ansprüchen angegeben.

Das Polymermaterial umfasst 30-70% an Gewicht, vorzugsweise 35-65% an Gewicht, besonders bevorzugt 40-60% an Gewicht, von einem Basispolymer, welches biologisch abbaubar nach ISO 14855 ist, und 70-30% an Gewicht, vorzugsweise 65%-35%, besonders bevorzugt 60-40%, von einem Barrierematerial, welches biologisch abbaubar nach ISO 14855 ist.

Erfindungsgemäss ist der Quotient aus der Sauerstoff-Permeabilität (gemäss ASTM D3985) des Basispolymers zur Sauerstoff-Permeabilität des Polymermaterials grösser als 2, vorzugsweise grösser als 2.5.

Das Polymermaterial ist als Ganzes biologisch abbaubar nach ISO 14855. Barrierematerialien sind aus dem Stand der Technik bekannt. Diese sind jedoch oftmals schwierig verarbeitbar und nicht stabil. Durch die erfindungsgemässe Vermischung mit einem Basispolymer wird die Stabilität des Barrierematerials verbessert, wobei die Barriereeigenschaften zumindest teilweise erhalten bleiben. Bekannte Barrierematerialien sind zudem teuer. Durch die erfindungsgemässe Vermischung mit einem Basispolymer werden die spezifischen Kosten pro Gewichtseinheit gesenkt. Aus dem Stand der Technik ist die Verwendung von Barrierematerialien als Zwischenschicht bekannt. Bei Zwischenschichten kann es zu Delamination kommen. Beim erfindungsgemässen Polymermaterial kann dieses Problem nicht auftreten.

In einer weiteren erfindungsgemässen Ausgestaltung ist das Basispolymer eine Mischung aus zumindest zwei biologisch abbaubaren Materialien nach ISO 14855, ausgewählt aus Polyhydroxyalkanoaten, Polycaprolacton, Polyester, Stärke, Polymilchsäure, Bio-Polyolefine, Bio-Polyamide, Lignin, Naturharz oder Cellulose. Durch die Verwendung einer Kombination von biologisch abbaubaren Materialien können die technischen Eigenschaften des Basispolymers an den Einsatzbereich angepasst werden.

In einer bevorzugten Ausgestaltung machen das Basispolymer und das Barrierematerial zusammen mindestens 90%, vorzugsweise mindestens 95%, Gewichtsprozent des Polymermaterials aus. Hierdurch wird einerseits eine biologische Abbaubarkeit des Grossteils des Materiales gewährleistet, gleichzeitig können durch die Zugabe von Additiven die Materialeigenschaften weiter optimiert werden.

Vorzugsweise weist das Polymermaterial eine Dichte von kleiner als 1.5 g/cm³, vorzugsweise kleiner als 1.45 g/cm³, besonders bevorzugt kleiner als 1.40 g/cm³, auf. Durch die geringe Dichte sind aus dem Polymermaterial gefertigte Behälter und Gefässe sehr leicht.

In einer weiteren Ausgestaltung weist das Polymermaterial einen Schmelzflussindex nach ISO DIN EN ISO 1133 (190°C, 2.16kg) von mindestens 20g/10min, vorzugsweise mindestens 24g/10min, besonders bevorzugt mindestens 26g/10min, auf. Hierdurch wird eine effiziente und prozessstabile Verarbeitbarkeit durch Spritzguss gewährleistet.

In einer weiteren bevorzugten erfindungsgemässen Ausgestaltung weist das Polymermaterial eine Zugfestigkeit nach DIN EN ISO 527-2 von mindestens 20.0 MPa, vorzugsweise mindestens 30.0 MPa, besonders bevorzugt mindestens 35.0 MPa, auf. Das Polymermaterial ist somit mechanisch stabil.

In einer weiteren besonders bevorzugten Ausgestaltung ist das Barrierematerial ein Vinylalkohol-Polymer, vorzugsweise ein Polyvinylalkohol-Polymer oder ein Ethylen-Vinylalkohol-Polymer. Diese Arten von Barrierematerial führen zu guten Barriereeigenschaften des Polymermaterials.

In einer weiteren Ausgestaltung umfasst das Polymermaterial bis zu 5% an Gewicht an Additiven wie Stabilisatoren, Synergisten, UV-Stabilisatoren, Haftvermittlern, Materialien zur Einfärbung des Polymermaterials oder Verarbeitungshilfen. Das Polymermaterial kann hierdurch auf den spezifischen Einsatzbereich optimiert werden.

Vorzugsweise sind das Basispolymer und das Barrierematerial miteinander vermischt. Die Vermischung wird vorzugsweise durch Compoundierung, Vermahlen oder ein thermisch unterstütztes Mischverfahren erreicht. Durch die Vermischung können auch schwierig zu verarbeitende oder nicht verarbeitungsstabile Barrierematerialien verwendet werden.

In einer weiteren erfindungsgemässen Ausgestaltung ist das Polymermaterial durch Spritzgiessen verarbeitbar und/oder extrudierbar.

Aus einem erfindungsgemässen Polymermaterial ist eine ebenfalls erfindungsgemässe Kaffeekapsel fertigbar. In einer besonders bevorzugten Ausgestaltung ist die Kaffeekapsel zumindest teilweise aus einem erfindungsgemässen Polymermaterial gefertigt.

Nachfolgend wird die Erfindung anhand von Ausführungsbeispielen näher erläutert. Hierbei bezieht sich die nachgenannten Beispiele 1, 2 und 3 auf ein erfindungsgemässes Polymermaterial, während die Vergleichsbeispiele 4 bis 6 und der Stand der Technik als Referenzen dienen.

Das erfindungsgemässe Polymermaterial wurde gemäss Tabelle 1 gefertigt. Die Compoundierung von Basispolymer und Barrierematerial (ggf. der Additive) wurde jeweils unter Verwendung eines BUSS Ko-Kneters des Typs MX-30 durchgeführt. Als Basispolymer wurde Arboblend 3350 V verwendet. Arboblend ist ein biologisch abbaubares Polymermaterial beinhaltend Polyhydroxyalkanoaten, Polycaprolacton, Polyester, Stärke, Polymilchsäure, Bio-Polyolefine, Bio-Polyamide, Lignin, Naturharz oder Cellulose. Als Barrierematerial wurden zwei Varianten von Nichigo G-Polymer verwendet (BVE-8049P & OKS-8077P). Nichigo G-Polymer sind Vinyl-Alkohol-Polymermaterialien.

Die Herstellung von Zugprüfstäben erfolgte mit einer Spritzgussmaschine des Typs Arburg Allrounder 370C 1000-250 und unter Verwendung eines entsprechenden Spritzgusswerkzeugs.

Zur Bestimmung der Sauerstoff-Permeabilität wurden Prüfkörper in der Form einer Nespresso-Kaffeekapsel mit einer Wandstärke von 0.75mm ±0.1mm auf einer Spritzgussmaschine des Typs Arburg Allrounder 370C 1000-250 hergestellt. Die Sauerstoff-Permeabilität wurde mit einer MOCON OX-TRAN bestimmt, bei 23°C.

Tabelle 2 zeigt gemessene Werte für relevante Materialkennwerte für die Beispiele 1-3, die Vergleichsbeispiele 4-6 sowie den Stand der Technik. Die erfindungsgemässen Beispiele 1-3 zeigen gute mechanische Werte im Vergleich zum Stand der Technik und den Vergleichsbeispielen. Die Zugfestigkeit ist gleich hoch oder höher als beim Stand der Technik. Die Zugabe des Barrierematerial beeinflusst die Zugfestigkeit nur geringfügig. Die Dichte wird durch die Zugabe des Barrierematerials ebenfalls kaum beeinflusst. Der Melt-Flow-Index (MFI) bewegt sich für die erfindungsgemässen Beispiele 1-3 in einem Bereich, in dem das Material per Spritzguss verarbeitbar ist. Das Vergleichsbeispiel 6 zeigt, dass bei zu hoher Zugabe des Barrierematerials der MFI stark abnimmt, wodurch eine effiziente Verarbeitung per Spritzguss verunmöglicht wird. Die Sauerstoffpermeabilität der erfindungsgemässen Beispiele 1-3 ist gegenüber dem Stand der Technik sowie gegenüber der Vergleichsbeispiele 4&5 deutlich verringert. Hierdurch wird die Haltbarkeit eines in der Kaffeekapsel eingeschlossenen Kaffeepulvers deutlich verlängert. Das Vergleichsbeispiel 6 weist ebenfalls eine gegenüber dem Stand der Technik verringerte Sauerstoffpermeabilität auf. Aufgrund der vorgenannten gleichzeitigen starken Abnahme des MFI weist das Vergleichsbeispiel 6 jedoch nicht alle vorteilhaften Eigenschaften der erfindungsgemässen Beispiele 1-3 auf. Das erfindungsgemässe Beispiel 3 zeigt, dass die positiven technischen Eigenschaften der erfindungsgemässen Beispiele auch bei Zugabe von Additiven zum Polymermaterial erhalten bleiben.

**Tabelle 1:**

| **Beispiel Nr.** | **Gewichtsprozent Basispolymer** | **Gewichtsprozent Barrierematerial** | **Gewichtsprozent Additive** |
|---|---|---|---|
| 1 (erfindungsgemäss) | 50% | 50% (OKS-8077P) | 0.0% |
| 2 (erfindungsgemäss) | 50% | 50% (BVE-8049P) | 0.0% |
| 3 (erfindungsgemäss) | 50% | 45% (BVE-8049P) | 5.0% |
| 4 (Vergleichsbeispiel) | 90% | 10% (BVE-8049P) | 0.0% |
| 5 (Vergleichsbeispiel) | 75% | 25% (BVE-8049P) | 0.0% |
| 6 (Vergleichsbeispiel) | 25% | 75% (BVE-8049P) | 0.0% |
| StdT (Stand der Technik) | 100% | 0% | 0% |

**Tabelle 2:**

| **Nr.** | **Zugfestigkeit [MPa] nach DIN EN ISO 527-2** | **Sauerstoff Permeabilität [cm³/d/bar/sample]** | **Dichte [g/cm³]** | **MFI [g/10min] nach DIN EN ISO 1133** |
|---|---|---|---|---|
| 1 | 49 | 0.0014 | 1.31 | 28 |
| 2 | 63 | 0.011 | 1.31 | 48 |
| 3 | 47 | 0.012 | 1.30 | 78 |
| 4 | 48 | 0.0292 | 1.34 | 36 |
| 5 | 44 | 0.349 | 1.33 | 41 |
| 6 | 89 | 0.014 | 1.30 | 2 |
| StdT | 54 | 0.328 | 1.35 | 18 |

## Patentansprüche

1. Polymermaterial,
mit 30-70% an Gewicht, vorzugsweise mit 35-65% an Gewicht, besonders bevorzugt mit 40-60% an Gewicht, von einem Basispolymer, welches biologisch abbaubar nach ISO 14855 ist,
und mit 70-30% an Gewicht, vorzugsweise mit 65%-35%, besonders bevorzugt mit 60-40%, von einem Barrierematerial, welches biologisch abbaubar nach ISO 14855 ist,
**dadurch gekennzeichnet, dass** der Quotient aus der Sauerstoff-Permeabilität (gemäss ASTM D3985) des Basispolymers zur Sauerstoff-Permeabilität des Polymermaterials grösser als 2, vorzugsweise grösser als 2.5, ist.

2. Polymermaterial nach Anspruch 1, **dadurch gekennzeichnet, dass** das Basispolymer eine Mischung aus zumindest zwei biologisch abbaubaren Materialien nach ISO 14855, ausgewählt aus Polyhydroxyalkanoaten, Polycaprolacton, Polyester, Stärke, Polymilchsäure, Bio-Polyolefine, Bio-Polyamide, Lignin, Naturharz oder Cellulose, ist.

3. Polymermaterial nach Anspruch 1 oder 2, **dadurch gekennzeichnet, dass** das Basispolymer und das Barrierematerial zusammen mindestens 90%, vorzugsweise mindestens 95%, Gewichtsprozent des Polymermaterials ausmachen.

4. Polymermaterial nach Anspruch 1, 2 oder 3, **dadurch gekennzeichnet, dass** das Polymermaterial eine Dichte von kleiner als 1.5 g/cm³, vorzugsweise kleiner als 1.45 g/cm³, besonders bevorzugt kleiner als 1.40 g/cm³, aufweist.

5. Polymermaterial nach einem der Ansprüche 1-4, **dadurch gekennzeichnet, dass** das Polymermaterial einen Schmelzflussindex nach ISO DIN EN ISO 1133 (190°C, 2.16kg) von mindestens 20g/10min, vorzugsweise mindestens 24g/10min, besonders bevorzugt mindestens 26g/10min, aufweist.

6. Polymermaterial nach einem der Ansprüche 1-5, **dadurch gekennzeichnet, dass** das Polymermaterial eine Zugfestigkeit nach DIN EN ISO 527-2 von mindestens 20.0 MPa, vorzugsweise mindestens 30.0 MPa, besonders bevorzugt mindestens 35.0 MPa, aufweist.

7. Polymermaterial nach einem der Ansprüche 1-6, **dadurch gekennzeichnet, dass** das Barrierematerial ein Vinylalkohol-Polymer, vorzugsweise ein Polyvinylalkohol-Polymer oder ein Ethylen-Vinylalkohol-Polymer, ist.

8. Polymermaterial nach einem der Ansprüche 1-7, **dadurch gekennzeichnet, dass** das Polymermaterial bis zu 5% an Gewicht an Additiven wie Stabilisatoren, Synergisten, UV-Stabilisatoren, Haftvermittlern, Materialien zur Einfärbung des Polymermaterials oder Verarbeitungshilfen umfasst.

9. Polymermaterial nach einem der Ansprüche 1-8, **dadurch gekennzeichnet, dass** das Basispolymer und das Barrierematerial miteinander vermischt sind.

10. Polymermaterial nach einem der Ansprüche 1-9, **dadurch gekennzeichnet, dass** das Polymermaterial durch Spritzgiessen verarbeitbar ist und/oder dass das Polymermaterial extrudierbar ist.

11. Kaffeekapsel, welche zumindest teilweise aus einem Polymermaterial nach einem der Ansprüche 1-10 gefertigt ist.

## Claims

1. Polymer material,
with 30-70% by weight, preferably with 35-65% by weight, particularly preferably with 40-60% by weight, of a base polymer which is biodegradable according to ISO 14855, and with 70-30% by weight, preferably 65% -35%, particularly preferably 60-40%, of a barrier material which is biodegradable according to ISO 14855,
**characterized in that** the quotient of the oxygen permeability (according to ASTM D3985) of the base polymer to the oxygen permeability of the polymer material is greater than 2, preferably greater than 2.5.

2. Polymer material according to claim 1, **characterized in that** the base polymer is a mixture of at least two biodegradable materials according to ISO 14855, selected from polyhydroxyalkanoates, polycaprolactone, polyester, starch, polylactic acid, bio-polyolefins, bio-polyamides, lignin, natural resin or cellulose.

3. Polymer material according to one of claims 1 or 2, **characterized in that** the base polymer and the barrier material together make up at least 90%, preferably at least 95%, percent by weight of the polymer material.

4. Polymer material according to one of claims 1, 2 or 3, **characterized in that** the polymer material has a density of less than 1.5 g / cm³, preferably less than 1.45 g / cm³, particularly preferably less than 1.40 g / cm³.

5. Polymer material according to one of claims 1-4, **characterized in that** he polymer material has a melt flow index according to ISO DIN EN ISO 1133 (190 ° C, 2.16kg) of at least 20g / 10min, preferably at least 24g / 10min, particularly preferably at least 26g / 10min.

6. Polymer material according to one of claims 1-5, **characterized in that** the polymer material has a tensile strength according to DIN EN ISO 527-2 of at least 20.0 MPa, preferably at least 30.0 MPa, particularly preferably at least 35.0 MPa.

7. Polymer material according to one of claims 1-6, **characterized in that** the barrier material is a vinyl alcohol polymer, preferably a polyvinyl alcohol polymer or an ethylene-vinyl alcohol polymer.

8. Polymer material according to one of claims 1-7, **characterized in that** the polymer material comprises up to 5% by weight of additives such as stabilizers, synergists, UV stabilizers, adhesion promoters, materials for coloring the polymer material or processing aids.

9. Polymer material according to one of claims 1-8, **characterized in that** the base polymer and the barrier material are mixed with one another.

10. Polymer material according to one of claims 1-9, **characterized in that** the polymer material can be processed by injection molding and / or that the polymer material can be extruded.

11. Coffee capsule which is at least partially made of a polymer material according to any one of claims 1-10.

## Revendications

1. Matériau polymère,
avec 30-70 % en poids, de préférence avec 35-65 % en poids, de manière particulièrement préférée avec 40-60 % en poids, d'un polymère de base qui est biodégradable selon ISO 14855,
et avec 70-30% 70-30 % en poids , de préférence de 65% à 35%, de manière particulièrement préférée de 60 à 40%, d'un matériau de barrière qui est biodégradable selon la norme ISO 14855,
**caractérisé en ce que** le quotient de la perméabilité à l'oxygène (selon la norme ASTM D3985) du polymère de base à la perméabilité à l'oxygène de la matière polymère est supérieur à 2, de préférence supérieur à 2,5.

2. Matériau polymère selon la revendication 1, **caractérisé en ce que** le polymère de base est un mélange d'au moins deux matériaux biodégradables selon ISO 14855, choisis parmi les polyhydroxyalcanoates, polycaprolactone, polyester, amidon, acide polylactique, bio-polyoléfines, bio-polyamides, lignine, résine naturelle ou de la cellulose.

3. Matériau polymère selon l'une des revendications 1 ou 2, **caractérisé en ce que** le polymère de base et le matériau barrière constituent ensemble au moins 90 %, de préférence au moins 95 %, pour cent en poids du matériau polymère.

4. Matériau polymère selon l'une des revendications 1, 2 ou 3, **caractérisé en ce que** le matériau polymère a une densité inférieure à 1,5 g/cm³, de préférence inférieure à 1,45 g/cm³, de manière particulièrement préférée inférieure à 1,40 g/cm³.

5. Matériau polymère selon l'une des revendications 1-4, **caractérisé en ce que** le matériau polymère a un indice de fluidité à chaud selon ISO DIN EN ISO 1133 (190°C, 2,16kg) d'au moins 20g/10min, de préférence d'au moins 24g/10min, de manière particulièrement préférée au moins 26g/10min.

6. Matériau polymère selon l'une des revendications 1-5, **caractérisé en ce que** le matériau polymère a une résistance à la traction selon DIN EN ISO 527-2 d'au moins 20,0 MPa, de préférence d'au moins 30,0 MPa, de manière particulièrement préférée d'au moins 35,0 MPa.

7. Matériau polymère selon l'une des revendications 1-6, **caractérisé en ce que** le matériau barrière est un polymère d'alcool vinylique, de préférence un polymère d'alcool polyvinylique ou un polymère éthylène-alcool vinylique.

8. Matériau polymère selon l'une des revendications 1-7, **caractérisé en ce que** le matériau polymère comprend jusqu'à 5 % en poids d'additifs tels que des stabilisants, des synergistes, des stabilisants UV, des promoteurs d'adhérence, des matériaux pour colorer le matériau polymère ou des auxiliaires de traitement.

9. Matériau polymère selon l'une des revendications 1-8, **caractérisé en ce que** le polymère de base et le matériau barrière sont mélangés l'un avec l'autre.

10. Matériau polymère selon l'une des revendications 1-9, **caractérisé en ce que** le matériau polymère peut être transformé par moulage par injection et/ou que le matériau polymère peut être extrudé.

11. Capsule de café qui est au moins partiellement fabriquée d'un matériau polymère selon l'une quelconque des revendications 1-10.
